# EUROPEAN PATENT SPECIFICATION

(11) **EP 2 768 899 B1**
(45) Date of publication and mention of the grant of the patent: **02.12.2020**
(21) Application number: 12780373.2
(22) Date of filing: 18.10.2012
(51) Int. Cl.: C08L 23/16

(54) **ETHYLENE-BASED POLYMER COMPOSITIONS AND ARTICLES PREPARED THEREFROM**
ETHYLENBASIERTE POLYMERZUSAMMENSETZUNGEN UND DARAUS HERGESTELLTE ARTIKEL
COMPOSITIONS POLYMÈRES À BASE D'ÉTHYLÈNE ET ARTICLES PRÉPARÉS À PARTIR DE CELLES-CI

(30) Priority: 20.10.2011 US 201161549295 P
(43) Date of publication of application: 27.08.2014
(73) Proprietor: Dow Global Technologies LLC, Midland, MI 48674 (US)
(72) Inventor: SUBRAMANIAN, Muthu, Singapore 650235 (SG)
(74) Representative: Boult Wade Tennant LLP
(86) International application number: PCT/US2012/060714
(87) International publication number: WO 2013/059391

(56) References cited:
- EP-A1- 0 849 323
- EP-A2- 0 357 322
- AU-B2- 631 287
- US-A- 5 281 651
- US-A1- 2010 190 914

## Description

### BACKGROUND OF THE INVENTION

Crosslinkable EPDM is currently used for power transmission components, such as engine mounts and engine belts. However, such components typically suffer from poor abrasion resistance which reduces their service life times. Rubber compositions are described in the following references: US6251977B1, US20040006179A1, US20030125438A1, EP628065B1, and WO2002026879A1. There is a need for new elastomeric compositions with improved abrasion resistance, and thus, improved service life. These needs and others have been met by the following invention.

### SUMMARY OF THE INVENTION

The invention provides a composition comprising the following:
A) greater than 35 wt% based on the weight of the composition of an ethylene/a-olefin/diene interpolymer;
B) a functionalized ethylene-based polymer selected from the group consisting of the following:
   a) an anhydride grafted ethylene/a-olefin interpolymer; and
   b) an ester functionalized ethylene-based polymer selected from the group consisting of ethylene acrylate copolymers, ethylene/butyl acrylate/carbon monoxide, ethylene/butyl acrylate/glycidyl methacrylate, ethylene butylacrylate, ethylene glycidyl methacrylate or ethylene methacrylic acid, wherein the functionalized ethylene-based polymer of Component B has a melt index (12) from 0.5 to 50 g/10 min;
C) a crosslinking agent; and
wherein the weight ratio of component A to component B is from 98:2 to 60:40.

### DETAILED DESCRIPTION OF THE INVENTION

As discussed above, the invention provides a composition comprising the following:
A) greater than 35 wt% based on the weight of the composition of an ethylene/a-olefin/diene interpolymer;
B) a functionalized ethylene-based polymer selected from the group consisting of the following:
   a) an anhydride grafted ethylene/a-olefin interpolymer; and
   b) an ester functionalized ethylene-based polymer selected from the group consisting of ethylene acrylate copolymers, ethylene/butyl acrylate/carbon monoxide, ethylene/butyl acrylate/glycidyl methacrylate, ethylene butylacrylate, ethylene glycidyl methacrylate or ethylene methacrylic acid, wherein the functionalized ethylene-based polymer of Component B has a melt index (I2) from 0.5 to 50 g/10 min;
C) a crosslinking agent; and
wherein the weight ratio of component A to component B is from 98:2 to 60:40.

An inventive composition may comprise a combination of two or more embodiments as described herein.

In one embodiment, the functionalized ethylene-based polymer is an anhydride grafted ethylene/a-olefin interpolymer.

In one embodiment, the functionalized ethylene-based polymer is an ester functionalized ethylene-based polymer.

In one embodiment, the functionalized ethylene-based polymer of component B has a melt index (I2) from 0.5 to 20 g/10 min.

In one embodiment, the ethylene/a-olefin/diene interpolymer of component A is an EPDM.

In one embodiment, the weight ratio of component A to component B is from 1.5 to 30, further from 1.5 to 20.

In one embodiment, the weight ratio of component A to component B is from 1.5 to 10, further from 1.5 to 6.

In one embodiment, the weight ratio of component A to component B is from 3 to 5.

In one embodiment, component A is present in an amount greater than, or equal to, 60 weight percent, or greater than, or equal to, 70 weight percent, or greater than, or equal to, 80 weight percent, based on the weight of component A and component B.

In one embodiment, component A is present in an amount less than, or equal to, 95 weight percent, or less than, or equal to, 90 weight percent, based on the weight of component A and component B.

In one embodiment, component A is present in an amount from 70 to 90 weight percent, based on the sum weight of components A and B.

In one embodiment, components A and B comprise at least 80 weight percent, or at least 90 weight percent, or at least 95 weight percent of the composition, based on the weight of all the polymer components of the composition.

In one embodiment, components A and B comprise at less than, or equal to, 100 weight percent, or less than, or equal to, 98 weight percent, or less than, or equal to, 96 weight percent, based on the weight of all the polymer components of the composition.

In one embodiment, components A and B comprise from 50 to 95 weight percent, or from 60 to 90 weight percent, or from 70 to 85 weight percent of the composition (based on the weight of the composition).

In one embodiment, component A is present in an amount greater than 40 weight percent, or greater than 45 weight percent, based on the weight of the composition.

In one embodiment, component A is present in an amount less than 80 weight percent, or less than 70 weight percent, or less than 60 weight percent, based on the weight of the composition.

In one embodiment, component B is present in an amount less than, or equal to, 40 weight percent, based on the weight of the composition.

In one embodiment, component B is present in an amount less than, or equal to, 35 weight percent, based on the weight of the composition.

In one embodiment, component B is present in an amount less than, or equal to, 30 weight percent, based on the weight of the composition.

In one embodiment, component B is present in an amount from 2 to 40 weight percent, or from 3 to 35 weight percent, or from 5 to 30 weight percent, based on the weight of the composition.

In one embodiment, the composition further comprises at least one additive.

In one embodiment, the composition comprises at least one filler. In a further embodiment, the filler is selected from the group consisting of carbon black, CaCO3, silica, and combinations thereof. In a further embodiment, the filler is selected from the group consisting of carbon black, CaCO3, and combinations thereof. In a further embodiment, the filler is carbon black.

In one embodiment, the composition comprises at least one filler. In a further embodiment, the composition comprises less than 70 weight percent, or less than 60 weight percent, or less than 50 weight percent, of the filler, based on the weight of the composition. In a further embodiment, the filler is carbon black.

In one embodiment, the composition comprises at least one filler. In a further embodiment, the composition comprises greater than 20 weight percent, or greater than 25 weight percent, or greater than 30 weight percent, of the filler, based on the weight of the composition. In a further embodiment, the filler is carbon black.

An inventive composition may comprise a combination of two or more embodiments as described herein.

The ethylene/a-olefin/diene interpolymer of Component A may comprise a combination of two or more embodiments as described herein.

The functionalized ethylene-based polymer of Component B may comprise a combination of two or more embodiments as described herein.

The invention also provides a crosslinked composition formed from an inventive composition.

In one embodiment, the crosslinked composition has a shore A Hardness greater than, or equal to 80, or greater than, or equal to 85.

The invention also provides an article comprising at least one component formed from an inventive composition. In one embodiment, the article is an automotive part. In a further embodiment, the article is a belt.

An inventive composition may comprise a combination of two or more embodiments as described herein.

An inventive crosslinked composition may comprise a combination of two or more embodiments as described herein.

An inventive article may comprise a combination of two or more embodiments as described herein.

### Ethylene/α-Olefin/Diene Interpolymer (Component A)

The ethylene/a-olefin/diene interpolymer comprises, in polymerize form, ethylene, an α-olefin, and a diene. The diene may be conjugated or nonconjugated, and is preferably nonconjugated. Suitable examples of nonconjugated dienes include the C4-C40 nonconjugated dienes.

The α-olefin may be either an aliphatic or an aromatic compound. The α-olefin is preferably a C3-C20 aliphatic compound, preferably a C3-C16 aliphatic compound, and more preferably a C3-C10 aliphatic compound. Preferred C3-C10 aliphatic α-olefins are selected from the group consisting of propylene, 1-butene, 1-hexene and 1-octene, and more preferably propylene. In a preferred embodiment, the interpolymer is an ethylene/propylene/diene (EPDM) terpolymer. In a further embodiment, the diene is 5-ethylidene-2-norbornene (ENB).

In one embodiment, the diene is a nonconjugated diene. Illustrative nonconjugated dienes include straight chain acyclic dienes, such as 1,4-hexadiene and 1,5-heptadiene; branched chain acyclic dienes, such as 5-methyl-1,4-hexadiene, 2-methyl-1,5-hexadiene, 6-methyl-1,5-heptadiene, 7-methyl-1,6-octadiene, 3,7-dimethyl-1,6-octadiene, 3,7-dimethyl-1,7-octadiene, 5,7-dimethyl-1,7-octadiene, 1,9-decadiene, and mixed isomers of dihydromyrcene; single ring alicyclic dienes such as 1,4-cyclohexadiene, 1,5-cyclooctadiene and 1,5-cyclododecadiene; multi-ring alicyclic fused and bridged ring dienes, such as tetrahydroindene, methyl tetrahydroindene; alkenyl, alkylidene, cycloalkenyl and cycloalkylidene norbornenes such as 5-methylene-2-norbornene (MNB), 5-ethylidene-2-norbornene (ENB), 5-vinyl-2-norbornene, 5-propenyl-2-norbornene, 5-isopropylidene-2-norbornene, 5-(4-cyclopentenyl)-2-norbornene, and 5-cyclohexylidene-2-norbornene. The diene is preferably a nonconjugated diene selected from the group consisting of ENB, dicyclopentadiene, 1,4-hexadiene, 7-methyl-1,6-octadiene, and preferably, ENB, dicyclopentadiene and 1,4-hexadiene, more preferably ENB and dicyclopentadiene, and even more preferably ENB.

In one embodiment, the ethylene/a-olefin/diene interpolymer is prepared in the presence of a single-site catalyst, such as a constrained geometry catalyst (CGC), for example, a monocyclopentadienyl titanium complex; or a polyvalent aryloxyether compound. Some examples of constrained geometry catalysts are described in U.S. Patent Nos. 5,272,236 and 5,278,272. Some examples of polyvalent aryloxyether compounds are described in U.S. Publication No. 2005/0164872 and International Publication No. WO 2007/136494.

In one embodiment, the ethylene/a-olefin/diene interpolymer is prepared in the presence of a multi-site catalyst, such as a Ziegler-Natta multi-site catalyst.

In one embodiment, the ethylene/a-olefin/diene interpolymer comprises a majority amount of polymerized ethylene, based on the weight of the interpolymer. In a preferred embodiment, the interpolymer is an EPDM. In a further embodiment, the diene is (ENB).

In one embodiment, the ethylene/a-olefin/diene interpolymer has a molecular weight distribution (Mw/Mn) from 1.5 to 5.0, or from 2.0 to 4.5, or from 2.0 to 4.0. All individual values and subranges from 1.5 to 5.0 are included herein and disclosed herein. In a preferred embodiment, the interpolymer is an EPDM. In a further embodiment, the diene is (ENB).

In one embodiment, the ethylene/a-olefin/diene interpolymer has a molecular weight distribution (Mw/Mn) from 2.0 to 3.5, or from 2.0 to 3.0, or from 2.0 to 2.5. All individual values and subranges from 2.0 to 3.5 are included herein and disclosed herein. In a preferred embodiment, the interpolymer is an EPDM. In a further embodiment, the diene is (ENB).

In one embodiment, the ethylene/a-olefin/diene interpolymer has a Mooney viscosity, ML(1+4) at 125°C, greater than, or equal to, 50, or greater than, or equal to, 60, or greater than, or equal to 70, or greater than, or equal to 80. In a preferred embodiment, the interpolymer is an EPDM. In a further embodiment, the diene is (ENB).

In one embodiment, the ethylene/a-olefin/diene interpolymer has a Mooney viscosity, ML(1+4) at 125°C, less than, or equal to, 300, or less than, or equal to, 200, or less than, or equal to, 150, or less than, or equal to, 100. In a preferred embodiment, the interpolymer is an EPDM. In a further embodiment, the diene is (ENB).

In one embodiment, the ethylene/a-olefin/diene interpolymer has a Mooney viscosity, ML(1+4) at 125°C, from 50 to 300, or from 60 to 200, or from 70 to 100. In a preferred embodiment, the interpolymer is an EPDM. In a further embodiment, the diene is (ENB).

Mooney viscosity is that of the neat interpolymer (or calculated viscosity of neat interpolymer for interpolymers that contain a filler, such as carbon black, and/or an oil). The neat interpolymer refers to the interpolymer without filler and without oil.

An ethylene/alpha-olefin/diene interpolymer may comprise a combination of two or more embodiments as described herein.

An EPDM terpolymer may comprise a combination of two or more embodiments as described herein.

### Functionalized ethylene-based Polymer (Component B)

The term "functional group," as used herein, refers to a chemical substituent containing at least one hetero-atom. A heteroatom is defined as an atom which is not carbon or hydrogen. Common heteroatoms include, but are not limited to, oxygen, nitrogen, sulfur, and phosphorus.

The term "functionalization agent," as used herein, refers to an organic compound containing at least one functional group (for example, maleic anhydride) that can react with a carbon atom located on the backbone of the ethylene-based polymer.

The term "functionalized ethylene-based polymer," as used herein, refers to an ethylene-based polymer that comprises at least one chemical group (chemical substituent), linked by a covalent bond, and which group comprises at least one hetero-atom. A heteroatom is defined as an atom which is not carbon or hydrogen. Common heteroatoms include, but are not limited to, oxygen, nitrogen, sulfur, and phosphorus.

In one embodiment, the functionalized ethylene-based polymer has a density from 0.860 to 0.965 g/cc, or from 0.865 to 0.960 g/cc, or from 0.870 to 0.955 g/cc.

The functionalized ethylene-based polymer has a melt index (12: 2.16kg/190°C) from 5 g/10 min to 50 g/10 min.

In one embodiment, the functionalized ethylene-based polymer is an anhydride grafted ethylene/a-olefin interpolymer, and further an anhydride grafted ethylene/a-olefin copolymer.

In one embodiment, the anhydride grafted ethylene/a-olefin interpolymer comprises units derived from ethylene and maleic anhydride. In a further embodiment, the interpolymer is a copolymer. In an anhydride grafted ethylene/a-olefin interpolymer, anhydride functionality is present in a majority molar amount, based on the amount of functional groups bonded to the interpolymer.

In one embodiment, the anhydride grafted ethylene/a-olefin interpolymer has a melt index (12) from 0.2 to 10, or from 0.5 to 5 g/10 min. In a further embodiment, the interpolymer is a copolymer.

In one embodiment, the anhydride grafted ethylene/a-olefin interpolymer comprises from 0.2 to 5, or from 0.5 to 2 weight percent maleic anhydride. In a further embodiment, the interpolymer is a copolymer.

In one embodiment, the functionalized ethylene-based polymer is an ester functionalized ethylene-based polymer, and further an ester functionalized ethylene-based copolymer. In an ester functionalized ethylene-based polymer, ester functionality is present in a majority molar amount, based on the amount of functional groups bonded to the polymer.

The ester functionalized ethylene-based polymer is selected from ethylene acrylate copolymers (such as ethylene butyl- acrylate copolymers, ethylene ethyl- acrylate copolymers and ethylene methyl-acrylate copolymers (EBAs, EEAs and EMAs)); ethylene/butyl acrylate/carbon monoxide (EnBACO); ethylene/butyl acrylate/glycidyl methacrylate (EnBAGMA); ethylene butylacrylate, ethylene glycidyl methacrylate, or ethylene methacrylic acid. In a further embodiment, the polymer is a copolymer.

In one embodiment, the functionalized ester ethylene-base polymer comprises units derived from ethylene and an acrylate. In a further embodiment, the acrylate is selected from ethylacrylate, methylacrylate or butylacrylate. In a further embodiment, the polymer is a copolymer.

In one embodiment, the ester functionalized ethylene-based polymer has a melt index (12) from 1 to 50 g/10 min, or from 2 to 25 g/10 min, or from 5 to 12 g/10 min. In a further embodiment, the polymer is a copolymer.

In one embodiment, the ester functionalized ethylene-based polymer comprises from 5 to 20, or from 7 to 12 weight percent ester. In a further embodiment, the polymer is a copolymer.

Suitable commercial functionalized ethylene-based polymers include AMPLIFY Functional Polymers, available from The Dow Chemical Company.

A functionalized ethylene-based polymer may comprise a combination of two or more embodiments as described herein.

An anhydride grafted ethylene/a-olefin interpolymer may comprise a combination of two or more embodiments as described herein.

An ester functionalized ethylene-based polymer may comprise a combination of two or more embodiments as described herein.

### Crosslinking Agents

Crosslinking agents include, but are not limited to, phenolic curing agents, peroxide curing agents, sulfur-containing compounds, and combinations thereof.

In one embodiment, the crosslinking agent is a phenolic curing agent. Phenolic curing agents include, but are not limited to, phenol-formaldehyde resins containing hydroxymethyl or halomethyl functional groups.

In one embodiment, the crosslinking agent is a sulfur-containing compound. Sulfur-containing compounds, include, but are not limited to, elemental sulfur, 4,4'-dithiodimorpholine, thiuram di-and polysulfides, alkylphenol disulfides, and 2-morpholino-dithiobenzothiazole. Sulfur can be a crystalline elemental sulfur or an amorphous elemental sulfur, and either type can be in pure form or supported on an inert carrier. An example of a supported sulfur is Rhenogran S-80 (80 percent S and 20 percent inert carrier) from Rhein Chemie.

In one embodiment, the crosslinking agent is a peroxide. The peroxide is preferably an organic peroxide. Suitable organic peroxides have a half life of at least one hour at 120°C. Illustrative peroxides include, but are not limited to, a series of vulcanizing and polymerization agents that contain α,α'-bis(t-butylperoxy)-diisopropylbenzene, and are available from Hercules, Inc., under the trade designation VULCUP, a series of such agents that contain dicumyl peroxide and are available from Hercules, Inc., under the trade designation DI-CUP, as well as LUPEROX peroxides made by ARKEMA, or TRIGONOX organic peroxides made by Akzo Nobel. Other suitable peroxides include 2,5-dimethyl-2,5-di-(t-butyl peroxy)hexane, di-t-butylperoxide, di-(t-amyl)peroxide, 2,5-di(t-amyl peroxy)-2,5-dimethylhexane, 2,5-di-(t-butylperoxy)-2,5-diphenylhexane, bis(alpha-methylbenzyl)peroxide, benzoyl peroxide, t-butyl perbenzoate, 3,6,9-triethyl-3,6,9-trimethyl-1,4,7-triperoxonane, bis(t-butylperoxy)-diisopropylbenzene, tertbutylcumyl peroxide, dicumyl peroxide, di-(tertbutylperoxyisopropyl) benzene, tertbutyl peroxybenzoate, and 1,1-di-(tertbutylperoxy)-3,3,5-trimethylcyclohexane.

In one embodiment, the composition further comprises a free radical coagent. Suitable free radical coagents include, but are not limited to, diallyl terephthalate, triallylcyanurate, triallylisocyanurate, 1,2 polybutadiene, divinyl benzene, trimethylolpropane trimethacrylate, polyethylene glycol dimethacrylate, ethylene glycol dimethacrylate, pentaerythritol triacrylate, allyl methacrylate, N N'-m-phenylene bismaleimide, toluene bismaleimide-p-quinone dioxime, nitrobenzene, diphenylguanidine. Preferred coagents include triallylcyanurate, 1,2 polybutadiene, divinyl benzene, and trimethyolpropane trimethacrylate.

The amount of the crosslinking agent (active content) can range from 0.5 to 10 parts by weight, based upon 100 parts of the polymers in the composition. Crosslinking temperatures and time employed are typical. Temperatures ranging from 121°C to 227°C (250°F to 440°F), and times ranging from one minute to 120 minutes can be employed.

A crosslinking agent may comprise a combination of two or more embodiments as described herein.

In one embodiment, the inventive crosslinked composition can be pelletized.

### Additives

An inventive composition may comprise one or more additives. Suitable additives include, but are not limited to, fillers, antioxidants, UV stabilizers, flame retardants, plasticizers or oils, colorants or pigments, and combinations thereof.

Fillers include, but are not limited to, carbon black; silicates of aluminum, magnesium, calcium, sodium, potassium and mixtures thereof; carbonates of calcium, magnesium and mixtures thereof; oxides of silicon, calcium, zinc, iron, titanium, and aluminum; sulfates of calcium, barium, and lead; alumina trihydrate; magnesium hydroxide; phenol-formaldehyde, polystyrene, and poly(alphamethyl)-styrene resins, natural fibers, synthetic fibers, and the like.

Plasticizers include, but are not limited to, petroleum oils, such as aromatic, paraffinic and naphthenic oils; polyalkylbenzene oils; organic acid monoesters, such as alkyl and alkoxyalkyl oleates and stearates; organic acid diesters, such as dialkyl, dialkoxyalkyl, and alkyl aryl phthalates, terephthalates, sebacates, adipates, and glutarates; glycol diesters, such as tri-, tetra-, and polyethylene glycol dialkanoates; trialkyl trimellitates; trialkyl, trialkoxyalkyl, alkyl diaryl, and triaryl phosphates; chlorinated paraffin oils; coumarone-indene resins; pine tars; vegetable oils, such as castor, tall, rapeseed, and soybean oils and esters and epoxidized derivatives thereof; and the like.

Antioxidants include, but are not limited to, hindered phenols, bisphenols, and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio)1,3,5-triazine, hexahydro-1,3,5-tris-β-(3,5-di-t-butyl-4-hydroxyphenyl)propionyl-s-triazine, 2,4,6-tris(n-1,4-dimethylpentylphenylene-diamino)-1,3,5-triazine, and tris-(3,5-di-t-butyl-4-hydroxybenzyl)isocyanurate.

In one embodiment, the composition further comprises an oil. In a further embodiment, the oil is present in an amount greater than 1 weight percent, or greater than 2 weight percent, or greater than 3 weight percent, based on the weight of the composition.

In one embodiment, the oil is present in an amount less than 20 weight percent, or less than 15 weight percent, or less than 10 weight percent, based on the weight of the composition.

An inventive composition may comprise a combination of two or more embodiments as described herein.

### Applications

The compositions of the present invention may be used to prepare a variety of articles or manufacture, or their component parts or portions. The inventive compositions may be converted into a finished article of manufacture by any one of a number of conventional processes and apparatus. Illustrative processes include, but are not limited to, extrusion, calendering, compression molding, and other typical thermoset material forming processes. For example, articles can be prepared by extrusion, extrusion followed by additional thermal treatment, low pressure molding, compression molding, and the like.

Articles include, but are not limited to, sheets, hoses, belts, molded goods, and extruded parts. Additional articles include automotive parts, weather strips, building profiles, wire and cable jacketing, flooring materials, gaskets, tires and tire components, computer parts, building materials and footwear components. A skilled artisan can readily augment this list without undue experimentation.

### DEFINITIONS

Unless stated to the contrary, implicit from the context, or customary in the art, all parts and percents are based on weight, and all test methods are current as of the filing date of this disclosure.

The term "composition," as used herein, includes a mixture of materials, which comprise the composition, as well as reaction products and decomposition products formed from the materials of the composition. Any reaction product or decomposition product is typically present in trace or residual amounts.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure) and the term interpolymer as defined hereinafter.

The term "interpolymer," as used herein, refers to polymers prepared by the polymerization of at least two different types of monomers. The term interpolymer thus includes the term copolymer (employed to refer to polymers prepared from two different types of monomers) and polymers prepared from more than two different types of monomers.

The term "ethylene-based polymer," as used herein, refers to a polymer that comprises, in polymerized form, a majority weight percent of ethylene (based on the weight
of the interpolymer), and optionally may comprise one or more comonomers.

The term "ethylene-based interpolymer," as used herein, refers to a polymer that comprises, in polymerized form, a majority weight percent of ethylene (based on the weight of the interpolymer), and at least one comonomer.

The term "ethylene/α-olefin/diene interpolymer," as used herein, refers to a polymer that comprises, in polymerized form, ethylene, an α-olefin, and a diene. In one embodiment, the "ethylene/α-olefin/diene interpolymer," comprises a majority weight percent of ethylene (based on the weight of the interpolymer).

The term, "ethylene/α-olefin copolymer," as used herein, refers to a copolymer that comprises, in polymerized form, a majority amount of ethylene monomer (based on the weight of the copolymer), and an α-olefin, as the only two monomer types.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

### TEST METHODS

### Compound Hardness

Compound hardness was measured to Shore A, according to ASTM D 2240. The stylus contacted the cured specimen for one second before the reading was taken. The tensile dumbbell sample of thickness 2 mm was used for hardness testing. Three dumbbell specimens were stacked in order to get the total thickness of 6 mm and the hardness was tested.

### Melt Index

Melt index (12) was measured in accordance with ASTM D-1238 (190°C; 2.16 kg). The result was reported in grams/10 minutes.

### Density

Density was measured in accordance with ASTM D-792.

The cure characteristics were measured using moving die rheometer (MDR) in accordance with ASTM D5289.

Tensile and Elongation properties were measured in accordance with ASTM D412. Test samples (Test method A - dumbbell and straight specimens) were die cut from cured sheet of 2 mm thickness.

Abrasion was measured in accordance with ISO 4649. The test samples were compression molded into cylindrical in shape of diameter 16 mm and height 10 mm.

### EXPERIMENTAL

Some polymers and additives are shown in Table 1.

**Table 1**

| Polymers and Additives | Density (g/cc) | Melt Index (12) (g/10 min) | PREFERRED (RANGE) phr |
|---|---|---|---|
| EPDM (phr) | Specific gravity = 0.86 | - | 95 - 55 |
| Carbon Black (phr) | | | 35 - 75 |
| Oil (phr) | | | 5 - 50 |
| Peroxide (phr) | | | 1 - 20 |
| Co-agent (phr) | | | 1 - 20 |
| PRIMACOR Copolymer (phr) | 0.92 - 0.96 | 0.5 - 30 | 5 - 20 |
| AMPLIFY GR Functionalized Polymer (phr) | 0.87 - 0.93 | 0.5 - 30 | 5 - 45 |
| AMPLIFY EA Functional Polymer (phr) | 0.92 - 0.94 | 0.5 - 30 | 5-45 |

Some additional additives include the following:
Resorcinol 2 - 4 phr,
Formaldehyde 1 - 4 phr,
Silica 10 - 25 phr,
P-170 RESIN (from Akrochem) 2 - 4 phr, and
Hexamethylenetetramine 1 - 4 phr.

One polymer formulations is shown in Table 2.

**Table 2**

| Composition | Inventive Example |
|---|---|
| EPDM* (phr) | 80 |
| Carbon Black (phr) | 55 |
| Oil (paraffinic) (phr) | 10 |
| Dicumyl peroxide (phr) | 4 |
| Co-agent HVA-2** (phr) | 2 |
| AMPLIFY GR 216 (phr) | 20 |

| | |
|---|---|
| * Mooney viscosity ML1+4@125°C = 40-60 (neat interpolymer) ** N,N'-m-phenylene dimaleimide | |

The composition in Table 2 was mixed using an internal mixer (Kneader or Banbury). All of the components, except the peroxide, were mixed at a temperature of about 130°C. The peroxide was added to the mixture, and the final mixture was mixed at a temperature from 90-110°C. The final mixture was sheeted by a few passes through a two roll mill. The uncured sheet was cured at 170-190°C. The cured composition was then subject to abrasion against a metal surface for eight hours. The surface of the cured composition was examined for the level of wear. The cured composition had a Shore A hardness from 85 to 90, and 90 percent of the cured composition remained intact. The inventive composition had very good abrasion resistance.

Additional formulations are shown in Table 3. These formulations represent the compression layer of automotive power transmission belts. Typically chopped fibers are used in the compression layer, in order to improve the hardness and abrasion resistance of the belt. Typically different kinds of chopped fibers, namely cotton, polyester or nylon, are used, depending on the availability of the fibers. Among these chopped fibers, polyester is most commonly used, because of its wide availability. The comparative examples include chopped fiber in the formulation. The level of functional polymer used in each inventive formulation depends on the density/crystallinity of the functional polymer.

**Table 3 (Amounts in phr)**

| Composition | Com. Ex. 1 | Com Ex. 2 | Com Ex. 3 | Reference Ex. 1 | Ex. 2 | Ex. 3 | Ex. 4 |
|---|---|---|---|---|---|---|---|
| Nordel IP 3640 (EPDM) | 100 | 100 | 100 | 85 | 80 | 60 | 80 |
| Kadox 720 Zinc Oxide | 2 | 2 | 2 | 2 | 2 | 2 | 2 |
| N-330 Carbon Black | 55 | 55 | 55 | 55 | 55 | 55 | 55 |
| Sunpar 2280 (paraffinic oil) | 10 | 10 | 10 | 10 | 10 | 10 | 10 |
| Cotton Fiber | 25 | - | - | - | - | - | - |
| Agerite Resin D (anti -oxidant) | 1 | 1 | 1 | 1 | 1 | 1 | 1 |
| Dicumyl Peroxide 99.0% | 4 | 4 | 4 | 4 | 4 | 4 | 4 |
| HVA-2 | 2 | 2 | 2 | 2 | 2 | 2 | 2 |
| Polyester Fiber | - | 25 | - | - | - | - | - |
| Nylon Fiber | - | - | 25 | - | - | - | - |
| PRIMACOR 3004 (EAA)* | - | - | - | 15 | - | - | - |
| AMPLIFY EA 103 (EEA)** | - | - | - | - | 20 | - | - |
| AMPLIFY GR 216 (MAH-g-POE)*** | - | - | - | - | - | 40 | - |
| AMPLIFY GR 209 (MAH-g-EB)**** | - | - | - | - | - | - | 20 |
| **Total** | 199 | 199 | 199 | 174 | 174 | 174 | 174 |

| | | | | | | | |
|---|---|---|---|---|---|---|---|
| *Ethylene acrylic acid copolymer; **Ethylene ethyl acrylate copolymer; *** MAH-g-Polyolefin Elastomer, **** MAH-g-Ethylene-butene copolymer | | | | | | | |

The compositions, shown in Table 3, were mixed using a Banbury mixer. All of the components, except the peroxide and coagent (HVA-2), were mixed at a temperature of about 120-130°C. The peroxide and coagent were added to the mixture, and the final mixture was mixed at a temperature of about 110-120°C. The final mixture was sheeted by a few passes through a two roll mill (temperature of about 100-120°C). The uncured sheet was cured (using compression molding machine with clamping force of 90,719 kg (200,000 pounds)) at 180°C, for t95+3 minutes (t95 data was obtained from MDR) for tensile, elongation and hardness specimens, and for 1.3 x (t95+3) minutes for abrasion specimens. Properties of the uncured and cured compositions are shown in Table 4.

**Table 4**

| Properties | Comp. Ex. 1 | Comp. Ex. 2 | Comp. Ex. 3 | Reference Ex. 1 | Ex. 2 | Ex. 3 | Ex. 4 |
|---|---|---|---|---|---|---|---|
| Uncured Properties | | | | | | | |
| MDR | | | | | | | |
| Test temp, °C | 180 | 180 | 180 | 180 | 180 | 180 | 180 |
| Test time, minutes | 30 | 30 | 30 | 30 | 30 | 30 | 30 |
| ML, dNm | 3.72 | 3.55 | 3.44 | 2.53 | 2.11 | 2.04 | 2.57 |
| MH, dNm | 37.68 | 39.28 | 38.02 | 29.46 | 27.61 | 25.35 | 29.59 |
| MH - ML, dNm | 33.96 | 35.73 | 34.58 | 26.93 | 25.5 | 23.31 | 27.02 |
| ts2, minutes | 0.35 | 0.33 | 0.34 | 0.34 | 0.34 | 0.39 | 0.39 |
| t95, minutes | 2.61 | 2.87 | 2.97 | 3.45 | 3.08 | 3.27 | 3.25 |
| | | | | | | | |
| Cured Properties | | | | | | | |
| Hardness, Shore A | 81 | 85 | 81 | 83 | 79 | 76 | 80 |
| Tensile strength, MPa | 7.43 | 8.25 | 12.50 | 12.75 | 10.74 | 11.74 | 11.01 |
| Elongation at break, % | 36 | 28 | 33 | 132 | 136 | 126 | 136 |
| Abrasion, Volume loss, mm³ | 146.3 | 148.5 | 127.9 | 130.0 | 120.2 | 100.5 | 76.9 |

The data shown in Table 4 demonstrates that the formulation containing ethylene-ethyl acrylate (EEA) copolymer (Inventive Example 2) and the formulations containing maleic anhydride (MAH) grafted ethylene/a-olefin copolymer (Inventive Examples 3 and 4) showed significantly improved abrasion resistance and elongation at break, at similar hardness, compared to the Comparative Examples 1, 2 and 3. The "EEA and MAH containing formulations" also demonstrate improved tensile strength at similar hardness, compared to comparative examples containing cotton and polyester fibers (Comparative Examples 1 and 2). The "ethylene acrylic acid (EAA) copolymer containing formulation" (Reference Example 1) showed better tensile strength, elongation at break and abrasion resistance, over Comparative Examples 1 and 2. These results demonstrate that each inventive example can be used to form a belt (for example an engine belt) that has a substantial increase in longevity in the end use application

## Claims

1. A composition comprising the following:
A) greater than 35 wt%, based on the weight of the composition of an ethylene/a-olefin/diene interpolymer;
B) a functionalized ethylene-based polymer selected from the group consisting of the following:
a) an anhydride grafted ethylene/a-olefin interpolymer; and
b) an ester functionalized ethylene-based polymer selected from the group consisting of ethylene acrylate copolymers, ethylene/butyl acrylate/carbon monoxide, ethylene/butyl acrylate/glycidyl methacrylate, ethylene butylacrylate, ethylene glycidyl methacrylate or ethylene methacrylic acid, wherein the functionalized ethylene-based polymer of component B has a melt index (12) from 0.5 to 50 g/10 min;
C) a crosslinking agent; and
wherein the weight ratio of component A to component B is from 98:2 to 60:40.

2. The composition of Claim 1, wherein the functionalized ethylene-based polymer is an anhydride grafted ethylene/a-olefin interpolymer.

3. The composition of Claim 1, wherein the functionalized ethylene-based polymer is an ester functionalized ethylene-based polymer.

4. The composition of any of the previous claims, wherein the ethylene/a-olefin/diene interpolymer of component A is an EPDM.

5. The composition of any of the previous claims, wherein components A and B comprise at least 80 weight percent of the composition, based on the weight of all the polymer components of the composition.

6. The composition of any of the previous claims, wherein the weight ratio of component A to component B is from 3 to 5.

7. The composition of any of the previous claims, wherein component B is present in an amount less than, or equal to, 40 weight percent, based on the weight of the composition.

8. The composition of any of the previous claims, further comprising at least one additive.

9. The composition of Claim 1, wherein the functionalized ethylene-based polymer of Component B has a melt index (12) from 0.5 to 20 g/10 min.

10. A crosslinked composition formed from the composition of any of the previous claims.

11. An article comprising at least one component formed from the composition of any of the previous claims.

12. The article of Claim 11, wherein the article is an automobile part.

13. The article of Claim 11 or Claim 12, wherein the article is a belt.

## Patentansprüche

1. Eine Zusammensetzung, beinhaltend das Folgende:
A) bezogen auf das Gewicht der Zusammensetzung, zu mehr als 35 Gew.-% ein Ethylen-α-Olefin-Dien-Interpolymer;
B) ein funktionalisiertes ethylenbasiertes Polymer, ausgewählt aus der Gruppe, bestehend aus dem Folgenden:
a) einem anhydridgepfropften Ethylen-α-Olefin-Interpolymer; und
b) einem esterfunktionalisierten ethylenbasierten Polymer, ausgewählt aus der Gruppe, bestehend aus Ethylenacrylatcopolymeren, Ethylen-Butylacrylat-Kohlenmonoxid, Ethylen-Butylacrylat-Glycidylmethacrylat, Ethylenbutylacrylat, Ethylenglycidylmethacrylat oder Ethylenmethacrylsäure, wobei das funktionalisierte ethylenbasierte Polymer von Bestandteil B einen Schmelzindex (I2) von 0,5 bis 50 g/10 min aufweist;
C) ein Vernetzungsmittel; und
wobei das Gewichtsverhältnis von Bestandteil A zu Bestandteil B 98 : 2 bis 60 : 40 beträgt.

2. Zusammensetzung gemäß Anspruch 1, wobei das funktionalisierte ethylenbasierte Polymer ein anhydridgepfropftes Ethylen-α-Olefin-Interpolymer ist.

3. Zusammensetzung gemäß Anspruch 1, wobei das funktionalisierte ethylenbasierte Polymer ein esterfunktionalisiertes ethylenbasiertes Polymer ist.

4. Zusammensetzung gemäß einem der vorhergehenden Ansprüche, wobei das Ethylen-α-Olefin-Dien-Interpolymer von Bestandteil A ein EPDM ist.

5. Zusammensetzung gemäß einem der vorhergehenden Ansprüche, wobei Bestandteile A und B bezogen auf das Gewicht aller Polymerbestandteile der Zusammensetzung mindestens 80 Gewichtsprozent der Zusammensetzung ausmachen.

6. Zusammensetzung gemäß einem der vorhergehenden Ansprüche, wobei das Gewichtsverhältnis von Bestandteil A zu Bestandteil B 3 bis 5 beträgt.

7. Zusammensetzung gemäß einem der vorhergehenden Ansprüche, wobei Bestandteil B bezogen auf das Gewicht der Zusammensetzung in einer Menge von weniger als oder gleich 40 Gewichtsprozent vorhanden ist.

8. Zusammensetzung gemäß einem der vorhergehenden Ansprüche, ferner beinhaltend mindestens einen Zusatzstoff.

9. Zusammensetzung gemäß Anspruch 1, wobei das funktionalisierte ethylenbasierte Polymer von Bestandteil B einen Schmelzindex (I2) von 0,5 bis 20 g/10 min aufweist.

10. Eine vernetzte Zusammensetzung, gebildet aus der Zusammensetzung gemäß einem der vorhergehenden Ansprüche.

11. Ein Artikel, beinhaltend mindestens einen aus der Zusammensetzung gemäß einem der vorhergehenden Ansprüche gebildeten Bestandteil.

12. Artikel gemäß Anspruch 11, wobei der Artikel ein Automobilteil ist.

13. Artikel gemäß Anspruch 11 oder Anspruch 12, wobei der Artikel ein Gurt ist.

## Revendications

1. Une composition comprenant les éléments suivants :
A) plus de 35 % en poids, rapporté au poids de la composition d'un interpolymère d'éthylène/α-oléfine/diène ;
B) un polymère à base d'éthylène fonctionnalisé sélectionné dans le groupe constitué des éléments suivants :
a) un interpolymère d'éthylène/α-oléfine greffé avec un anhydride ; et
b) un polymère à base d'éthylène fonctionnalisé par un ester sélectionné dans le groupe constitué de copolymères d'éthylène acrylate, éthylène/acrylate de butyle/monoxyde de carbone, éthylène/acrylate de butyle/méthacrylate de glycidyle, éthylène acrylate de butyle, éthylène méthacrylate de glycidyle ou éthylène acide méthacrylique, dans laquelle le polymère à base d'éthylène fonctionnalisé du constituant B a un indice de fusion (I2) allant de 0,5 à 50 g/10 min ;
C) un agent de réticulation ; et
dans laquelle le rapport en poids du constituant A au constituant B va de 98/2 à 60/40.

2. La composition de la revendication 1, dans laquelle le polymère à base d'éthylène fonctionnalisé est un interpolymère d'éthylène/α-oléfine greffé avec un anhydride.

3. La composition de la revendication 1, dans laquelle le polymère à base d'éthylène fonctionnalisé est un polymère à base d'éthylène fonctionnalisé par un ester.

4. La composition de n'importe lesquelles des revendications précédentes, dans laquelle l'interpolymère d'éthylène/α-oléfine/diène du constituant A est un EPDM.

5. La composition de n'importe lesquelles des revendications précédentes, dans laquelle les constituants A et B représentent au moins 80 pour cent en poids de la composition, rapporté au poids de tous les constituants polymères de la composition.

6. La composition de n'importe lesquelles des revendications précédentes, dans laquelle le rapport en poids du constituant A au constituant B va de 3 à 5.

7. La composition de n'importe lesquelles des revendications précédentes, dans laquelle le constituant B est présent dans une quantité inférieure ou égale à 40 pour cent en poids, rapporté au poids de la composition.

8. La composition de n'importe lesquelles des revendications précédentes, comprenant en outre au moins un additif.

9. La composition de la revendication 1, dans laquelle le polymère à base d'éthylène fonctionnalisé du constituant B a un indice de fusion (I2) allant de 0,5 à 20 g/10 min.

10. Une composition réticulée formée à partir de la composition de n'importe lesquelles des revendications précédentes.

11. Un article comprenant au moins un constituant formé à partir de la composition de n'importe lesquelles des revendications précédentes.

12. L'article de la revendication 11, l'article étant une pièce automobile.

13. L'article de la revendication 11 ou de la revendication 12, l'article étant une courroie.
